# EUROPÄISCHE PATENTSCHRIFT

(11) **EP 2 052 594 B1**
(45) Veröffentlichungstag und Bekanntmachung des Hinweises auf die Patenterteilung: **13.10.2010**
(21) Anmeldenummer: 08018524.2
(22) Anmeldetag: 23.10.2008
(51) Int. Cl.: A01B 33/14

(54) **Kreiselegge mit schnellauswechselbaren Zinken**
Power harrow with quick switch teeth
Herse rotative dotée de dents rapidement échangeables

(30) Priorität: 27.10.2007 DE 102007051483
(43) Veröffentlichungstag der Anmeldung: 29.04.2009
(73) Patentinhaber: Lemken GmbH & Co. KG, 46519 Alpen (DE)
(72) Erfinder: Gebbeken, Martin, 46519 Alpen (DE); Heicks, Alois, 46487 Wesel (DE); Werries, Dieter, 46519 Alpen (DE)
(74) Vertreter: Schulte & Schulte

(56) Entgegenhaltungen:
- EP-A- 0 501 349
- EP-A- 0 891 688
- EP-A- 1 671 526
- DE-U1- 9 006 000

## Beschreibung

Die Erfindung betrifft ein Bodenbearbeitungsgerät insbesondere Kreiselegge, mit mindestens einem quer zur Arbeitsrichtung angeordneten Rahmenkasten mit mehreren in einer quer zur Fahrtrichtung verlaufenden Reihe nebeneinander angeordneten und um aufrechte Achsen rotierende angetriebene Rotoren, die nach unten gerichtete Zinken aufweisen, wobei die Zinken jeweils ein Arbeitsteil und ein dazu abgewinkeltes Befestigungsteil aufweisen, welches in taschenförmigen Aufnahmen der Rotoren gehaltert und formschlüssig zum Rotor fixiert ist, wobei das Befestigungsteil bis zu einem Einsteckanschlag in die taschenförmige Aufnahme einsteckbar ausgebildet ist und das Befestigungsteil endseitig eine formschlüssige Schnittstelle aufweist.

Ein derartiges Bodenbearbeitungsgerät ist der europäischen Patentschrift EP 1 671 526 B1 zu entnehmen. Bei dem Gegenstand dieser EP 1 671 526 B1 befinden sich die Befestigungsteile der Zinken bis zu ihrem Einsteckanschlag in taschenförmigen Aufnahmen der Rotoren und sind formschlüssig direkt miteinander verbunden. Die Befestigungsteile der Zinken sind entsprechend lang ausgebildet. Über Haltemittel werden die Befestigungsteile der Zinken in der Formschlussverbindung gehalten. Aufgrund der langen Befestigungsteile stützen sich diese zwar statisch günstig in den taschenförmigen Aufnahmen der Rotoren ab, jedoch wird dadurch ein erhöhter Materialeinsatz erforderlich. Der am Zinken befindliche Einsteckanschlag erfordert allerdings ein Schmieden des Zinkens, was zu erhöhten Herstellkosten führen kann.

Auch die Patentschrift EP 0 891 688 B1 zeigt eine entsprechendes Bodenbearbeitungsgerät, bei dem die Befestigungsteile der Zinken über ein Steckteil formschlüssig miteinander verbunden sind. Über dieses Steckteil werden die Zinken eines Rotors zusätzlich noch zum Rotor fixiert. Dies hat den Nachteil, dass bei Auftreffen eines Zinkens auf ein Bodenhindernis, das Steckteil extrem belastet wird. Es wird dann beschädigt oder muss entsprechend massiv dimensioniert sein. Das Steckteil ist außerdem unterhalb des Rotors und unterhalb der Befestigungsteile der Zinken angeordnet und dadurch zusätzlich extremem Verschleiß ausgesetzt. Beschädigungen des Einsteckteils und dadurch auch ein Verlieren der Zinken können nicht ausgeschlossen werden.

Der Erfindung liegt die Aufgabe zugrunde, auf einfache Weise eine formschlüssige Verbindung der Zinken mit dem Rotor sicherzustellen, den Einsatz von Zinken zu ermöglichen, die sehr kompakte Befestigungsteile besitzen und einen sicheren Verschleißschutz aller Halteteile sicherzustellen.

Diese Aufgabe wird erfindungsgemäß durch die Merkmale des Patentanspruches 1 gelöst.

Durch das Vorsehen eines Verbindungsteils mit geeigneten Schnittstellen wird eine sichere Formschlussverbindung der Befestigungsteile der Zinken sichergestellt. Das Verbindungsteil befindet sich auf einer Ebene mit den Befestigungsteilen innerhalb der taschenförmigen Aufnahme und ist somit keinem Verschleiß ausgesetzt. Der Einsteckanschlag stellt sicher, dass das Verbindungsteil letztendlich nur ein Herausschleudern der Zinken verhindern muss, also überwiegend nur Fliehkräfte übernehmen muss. Es kann dadurch entsprechend leicht und dadurch einfach handhabbar ausgebildet sein. Durch eine einfache Sicherungsvorrichtung wird das Verbindungsteil und damit die Zinken in Arbeitsstellung sicher fixiert.

Die Erfindung sieht weiter vor, dass der Einsteckanschlag am Rotor oder an der taschenförmigen Aufnahme vorgesehen ist, vorzugsweise in der taschenförmigen Aufnahme.

Das Vorsehen des Einsteckanschlages am Rotor oder besser noch in der taschenförmigen Aufnahme ermöglicht die Herstellung eines einfachen und kostengünstigen Zinkens. Der Einsteckanschlag kann insbesondere einfach aufgebaut sein, wenn er in der taschenförmigen Aufnahme des Rotors vorgesehen ist. Der Einsteckanschlag stellt sicher, dass der Zinken eines Rotors nur so weit eingesteckt werden kann, dass er im Rotor sicher fixiert ist kann aber ein Verschieben der mittelbar miteinander verbundenen Zinken in den taschenförmigen Aufnahmen nicht möglich oder nur begrenzt möglich ist. Ein geringer Verschiebeweg ist auf jeden Fall sinnvoll, um erstens das Montieren der Zinken zu vereinfachen aber auch um den Einfluss von Schmutz und Erdreich gering zu halten. Bei einem zu geringen Spiel lässt sich in Verbindung mit Schmutz und Erdreich eine einfache Montage oder Demontage der Zinken nicht mehr realisieren.

Erfindungsgemäß ist weiter vorgesehen, dass das Befestigungsteil des jeweiligen Zinkens am Ende vorzugsweise einen Gegenhaken als formschlüssige Schnittstelle aufweist, dass das Verbindungsteil Doppelhaken als korrespondierende Schnittstellen aufweist und dass die Doppelhaken Haken des Verbindungsteils in die Gegenhaken der Befestigungsteile eingreifend und die Befestigungsteile und damit die Zinken entgegen der Fliehkraft verbindend und in Arbeitsstellung haltend ausgebildet sind.

Diese Art der Verbindung der Zinken ist einfach und sicher. Das Verbindungsteil wird wie ein Puzzlestück zwischen die bis zum Einsteckanschlag eingesteckten Zinken platziert und verbindet beide Befestigungsteile und damit die Zinken formschlüssig miteinander und verhindert so ein Herausschleudern der Zinken.

Die Erfindung sieht weiter vor, dass die Sicherungsvorrichtung vorzugsweise aus einer drehbaren Verriegelung mit Raste besteht, die unverlierbar mit dem Verbindungsteil verbunden ist und das Verbindungsteil in Arbeitsstellung fixiert und nach Drehen der drehbaren Verriegelung einen Austausch der Zinken durch Demontage des Verbindungsteils ermöglichend ausgebildet ist.

Durch die Sicherungsvorrichtung mit drehbarer Verriegelung mit Raste wird eine einfache Sicherung des Verbindungsteils bereitgestellt. Ein Sechskant am drehbaren Teil der Verriegelung ermöglicht den Einsatz von Werkzeug und damit auch eine einfache Handhabung der Vorrichtung in dem Fall, wenn sich Erdreich oder Schmutz am Rotor befindet.

Die Erfindung sieht weiter vor, dass die taschenförmige Aufnahme eine längliche Öffnung aufweist, die eine Montage und Demontage des Verbindungsteils zulassend ausgebildet ist, dass die drehbare Verriegelung einen Querstift aufweist, der das Verbindungsteil in Arbeitsstellung fixiert und dass der Querstift eine Länge aufweist die größer ist als die Breite der länglichen Öffnung aber kleiner als die Länge der länglichen Öffnung.

Weitere Einzelheiten und Vorteile des Erfindungsgegenstandes ergeben sich aus der nachfolgenden Beschreibung und der zugehörigen Zeichnungen, in denen ein Ausführungsbeispiel mit den dazu notwendigen Einzelheiten und Einzelteilen dargestellt ist. Es zeigen:
- Figur 1: ein Bodenbearbeitungsgerät in Form einer Kreiselegge in Seitenansicht,
- Figur 2: eine Explosionsdarstellung des Rotors mit Zinken und Verbindungsteil,
- Figur 3: eine Ansicht der Unterseite eines Rotors mit offener taschenförmiger Aufnahme,
- Figur 4: eine vergleichbare Ansicht wie Figur 3, allerdings mit geschlossener taschenförmiger Aufnahme und
- Figur 5: einen Rotor in Seitenansicht.

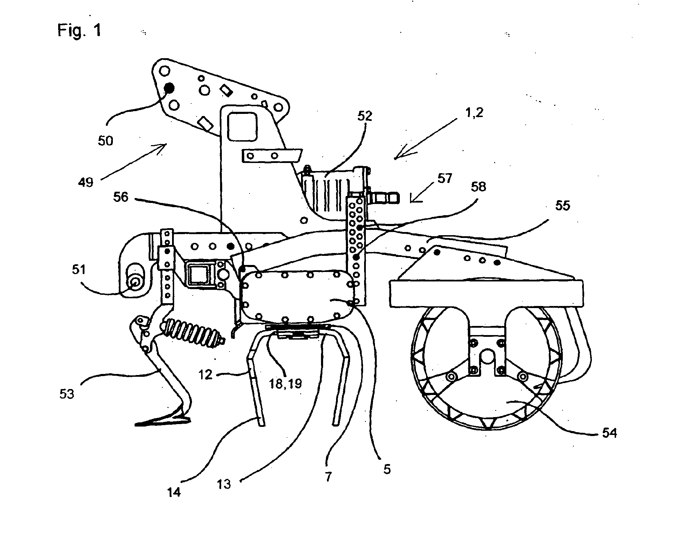

Figur 1 zeigt ein Bodenbearbeitungsgerät 1 in Form einer Kreiselegge 2 mit einem Dreipunktturm 49, der einen Verbindungspunkt 50 für die Verbindung mit einem nicht dargestellten Traktoroberlenker und Verbindungspunkte 51 für die Verbindung mit nicht dargestellten Traktvrunterlenkem aufweist. Unterhalb des Dreipunktturms 49 ist der Rahmenkasten 5 angeordnet. Auf diesem Rahmenkasten 5 befindet sich der Antrieb der Rotoren 7, hier in Form eines Getriebes 52. Vor dem Rahmenkasten 5 sind Spurlockerer 53 angeordnet. Hinter dem Rahmenkasten 5 befindet sich die Walze 54, die über die Träger 55 um die Achse 56 schwenkbar und tiefeneinstellbar mit dem Rahmenkasten 5 verbunden ist. Eine Tiefeneinstellung der Kreiselegge 2 erfolgt mit Hilfe der Stiftverstellung 57 mit den Steckstiften 58. Der Rotor 7, der unterhalb des Rahmenkastens 5 drehbar angeordnet ist, weist Taschen 19 mit taschenförmigen Aufnahmen 18 auf, in denen die Zinken 12 mit ihrem Befestigungsteil 13 eingesteckt und arretiert sind. Der Zinken 12 weist neben dem Befestigungsteil 13 das Arbeitsteil 14 auf. Der Einfachheit halber ist in der Figur 1 nur ein Rotor mit Zinken 12 dargestellt. In der Regel befinden sich am Rahmenkasten 5 mehrere Rotoren 7 mit Zinken 12.

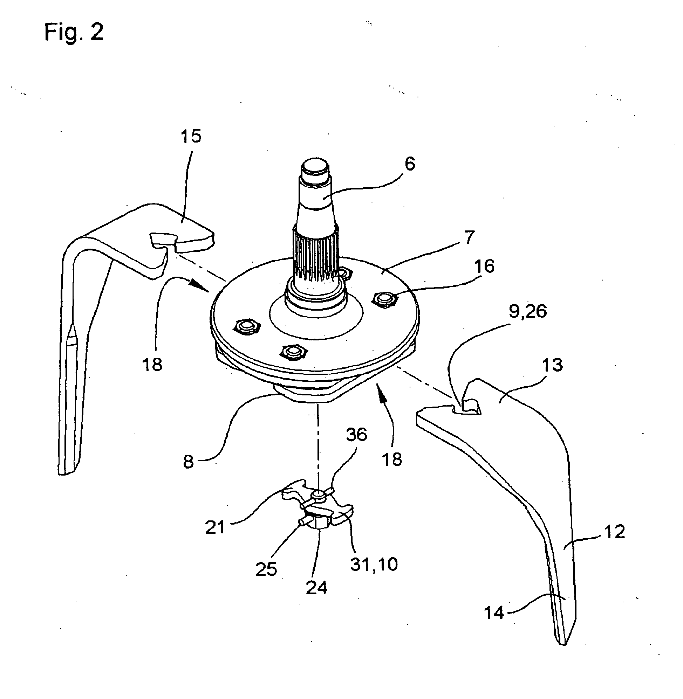

Die Figur 2 zeigt eine perspektivische Darstellung des Rotors 7 mit seiner Achse 6. Die Zinken 12 mit Befestigungsteil 13 und Arbeitsteil 14 sind hier nicht in die taschenförmige Aufnahme 18 der Tasche 19 gesteckt. Die Figur 2 verdeutlicht auch die Art der formschlüssigen Schnittstelle 9 mit Gegenhaken 26 am Ende 15 des Befestigungsteils 13 und auch die korrespondierende Schnittstelle 10 mit Doppelhaken 31 des Verbindungsteils 21. Es sind auch andere Arten einer Formschlussverbindung von Befestigungsteil 13 und Verbindungsteil 21 denkbar. In jedem Fall müssen die Schnittstellen 9, 10 am Ende 15 des Befestigungsteils 13 und am Verbindungsteil 21 eine formschlüssige Verbindung im Sinne der Erfindung zulassen. Das Verbindungsteil 21 weist eine Sicherungsvorrichtung 24 mit drehbarer Verriegelung 35 mit Querstift 25 und Raste 36 auf. In Arbeitsstellung verhindert der Querstift 25 ein Herausfallen des Verbindungsteils 21. Der Querstift ist länger als die Breite der länglichen Öffnung 23 im Rotor 7 bzw. in der Bodenplatte 8 des Rotors. Die Raste 36 steht unter Federspannung und wird in eine Mulde des Verbindungsteils 21 gedrückt. So wird ein unbeabsichtigtes Verdrehen der drehbaren Verriegelung 35 sicher verhindert.

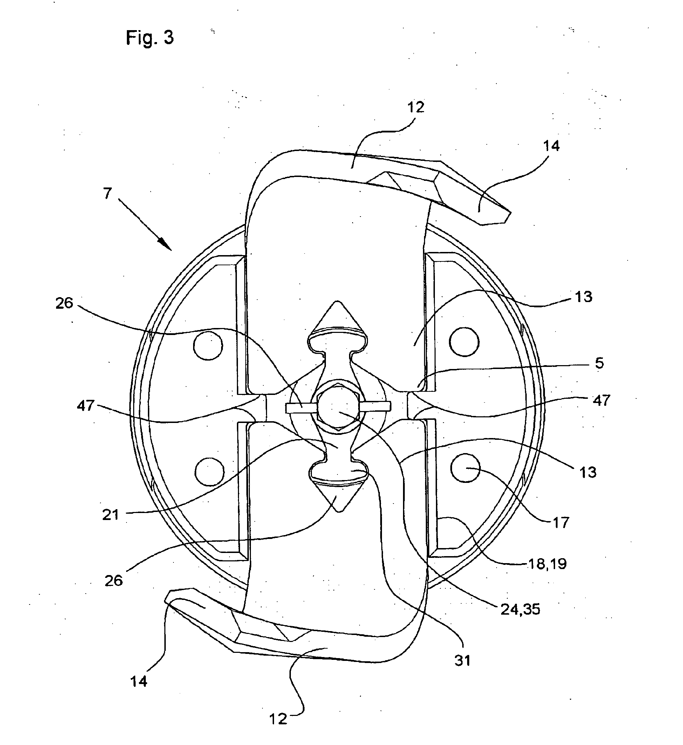

Die Figur 3 zeigt eine Ansicht von der Unterseite des Rotors 7 ohne Bodenplatte 8 mit den in die Tasche 19 bzw. taschenförmigen Aufnahme 18 eingesteckten Zinken 12. Die Figur 3 verdeutlicht insbesondere die Ausbildung des Befiestigungsteiles 13 mit dem Gegenhaken 26 und des Verbindungsteils 21 mit Doppelhaken 31 und deren Formschlussverbindung. Zusammen mit den Einsteckanschlägen 47 werden die Zinken 12 fest im Rotor 7 abgestützt und fixiert. Ein Hin- und Herrutschen der Befestigungsteile 13 der Zinken 12 in der Tasche 19 wird dadurch verhindert. Die Bohrungen 17 dienen der Befestigung der Bodenplatte 8 des Rotors 7. Die Bodenplatte 8 kann je nach Bedarf auch an dem Rotor 7 angeschweißt oder auch angeklebt sein.

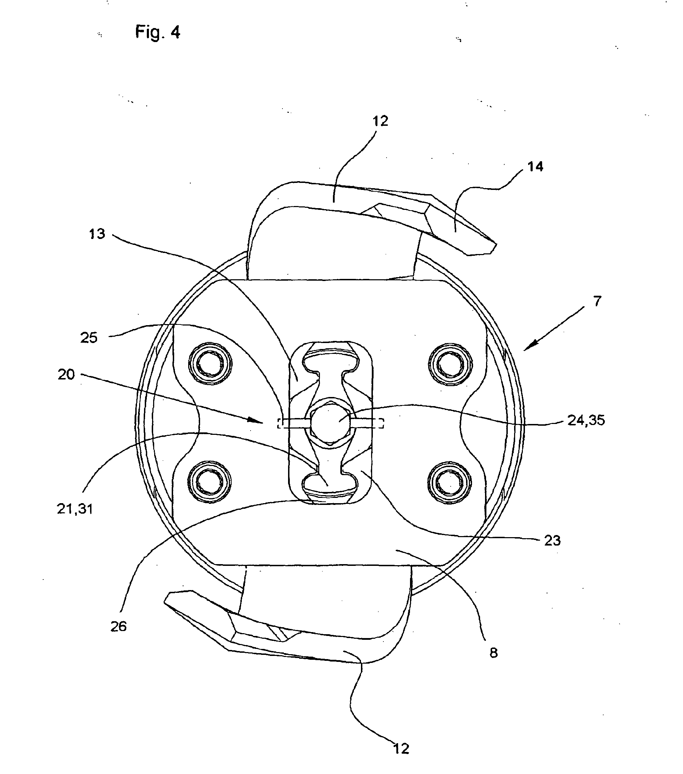

Die Figur 4 zeigt eine Ansicht von der Unterseite des Rotors 7 mit Bodenplatte 8, den montierten Zinken 12 und dem Verbindungsteil 21 mit Sicherungsvorrichtung 24. Die Bodenplatte 8 ist hier über die Schrauben 16 mit dem Rotor 7 verbunden. Die Sicherungsvorrichtung 24 ist unverlierbar am Verbindungsteil 21 befestigt und weist eine drehbare Verriegelung 35 mit Raste 36 auf. Die Tasche 19 weist im mittleren Bereich 20 ein längliche Öffnung 23 auf durch die das Verbindungsteil 21 eingelegt bzw. platziert werden kann. Die drehbare Verriegelung 35 weist einen Querstift 25 auf, dessen Länge größer ist als die Breite der länglichen Öffnung 23. Im montierten Zustand und entsprechend gedrehten Querstift 25 kann das Verbindungsteil 21 nicht herausfallen oder verloren gehen. Eine nicht sichtbare Raste 36 verhindert ein versehentliches Verdrehen der drehbaren Verriegelung 35.

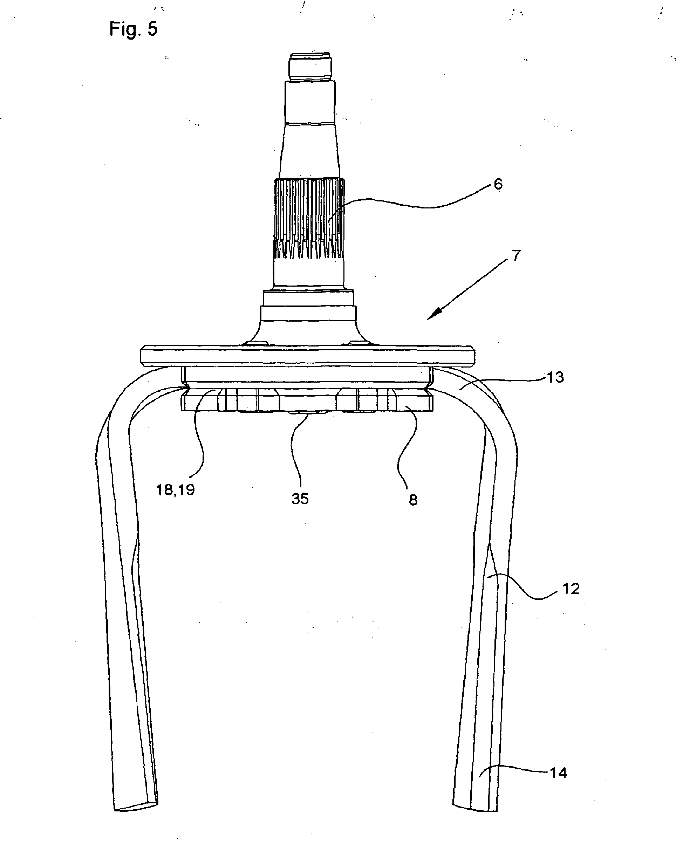

Die Figur 5 zeigt eine Seitenansicht eines Rotors 7 mit Achse 6. Sie verdeutlicht, wie kompakt der Rotor 7 mit Bodenplatte 8 und taschenförmiger Aufnahme 18 bzw. Tasche 19 ausgebildet ist und dass sowohl das Verbindungsteil 21 als auch die Sicherungsvorrichtung 24 nicht unterhalb der Bodenplatte 8 oder der taschenförmigen Aufnahme 18 überstehen. Ein Verschleiß und ein unbeabsichtigtes Verdrehen der drehbaren Verriegelung 35 ist damit ausgeschlossen.

## Patentansprüche

1. Bodenbearbeitungsgerät (1), insbesondere Kreiselegge (2), mit mindestens einem quer zur Arbeitsrichtung angeordneten Rahmenkasten (5) mit mehreren in einer quer zur Fahrtrichtung verlaufenden Reihe nebeneinander angeordneten und um aufrechte Achsen (6) rotierende angetriebene Rotoren (7), die nach unten gerichtete Zinken (12) aufweisen, wobei die Zinken (12) jeweils ein Arbeitsteil (14) und ein dazu abgewinkeltes Befestigungsteil (13) aufweisen, welches in taschenförmigen Aufnahmen (18) der Rotoren (7) gehaltert und formschlüssig zum Rotor (17) fixiert ist, wobei das Befestigungsteil (13) bis zu einem Einsteckanschlag (47) in die taschenförmige Aufnahme (18) einsteckbar ausgebildet ist und das Befestigungsteil (13) endseitig eine formschlüssige Schnittstelle (9) aufweist,
**dadurch gekennzeichnet,**
**dass** die formschlüssig Schnittstelle (9) über ein Verbindungsteil (21) mit korrespondierenden Schnittstellen (10) für die Verbindung mit der formschlüssigen Schnittstelle (9) des Arbeitsteils (14) des anderen Zinkens (12) des gleichen Rotors (7) verbunden ist, dass eine Sicherungsvorrichtung (24) vorgesehen ist, die das Verbindungsteil (21) in Verbindungsposition hält und dass das Verbindungsteil (21) auf einer Ebene liegend mit den Befestigungsteilen (13) der Zinken (12) liegend ausgebildet ist.

2. Bodenbearbeitungsgerät nach Anspruch 1,
**dadurch gekennzeichnet,**
**dass** der Einsfieckanschlag (47) am Rotor (7) oder an der taschenförmigen Aufnahme (18) vorgesehen ist, vorzugsweise in der taschenförmigen Aufnahme (18).

3. Bodenbearbeitungsgerät nach Anspruch 1 und 2,
**dadurch gekennzeichnet,**
**dass** das Befestigungsteil (13) des jeweiligen Zinkens (12) am Ende (15) vorzugsweise einen Gegenhaken (26) als formschlüssige Schnittstelle (9) aufweist, dass das Verbindungsteil (21) Doppelhaken (31) als korrespondierende Schnittstellen (10) aufweist und dass der Doppelhaken (31) des Verbindungsteils (21) in den Gegenhaken (26) der Befestigungsteile (13) eingreifend und die Befestigungsteile (13) und damit die Zinken (12) entgegen der Fliegkraft verbindend und in Arbeitsstellung haltend ausgebildet sind.

4. Bodenbearbeitungsgerät nach Anspruch 1 bis 3,
**dadurch gekennzeichnet,**
**dass** die Sicherungsvorrichtung (24) vorzugsweise aus einer drehbaren Verriegelung (35) mit Raste (36) besteht, die unverlierbar mit dem Verbindungsteil (21) verbunden ist und das Verbindungsteil (21) in Arbeitsstellung fixiert und nach Drehen der drehbaren Verriegelung (35) einen Austausch der Zinken (12) durch Demontage des Verbindungsteils (21) ermöglichend ausgebildet ist.

5. Bodenbearbeitungsgerät nach Anspruch 1 bis 4,
**dadurch gekennzeichnet,**
**dass** die taschenförmige Aufnahme (18) eine längliche Öffnung (23) aufweist, die eine Montage und Demontage des Verbindungsteils (21) zulassend ausgebildet ist, dass die drehbare Verriegelung (35) einen Querstift (25) aufweist, der das Verbindungsteil (21) in Arbeitsstellung fixiert und dass der Querstift (25) eine Länge aufweist die größer ist als die Breite der länglichen Öffnung (23) aber kleiner als die Länge der länglichen Öffnung (23).

## Claims

1. A tillage machine (1), in particular a rotary harrow (2), having at least one box frame (5) arranged transversely to the working direction with a plurality of rotors (7) arranged next to one another in a row extending transversely to the direction of travel and driven in rotation about upright shafts (6), which rotors (7) have downwardly directed tines (12), the tines (12) in each case having a working part (14) and a fastening part (13) at an angle thereto, which fastening part (13) is mounted in pocket-like receptacles (18) in the rotors (7) and fixed in form-fitting manner to the rotor (17), the fastening part (13) being configured so as to be insertable into the pocket-like receptacle (18) as far as an insertion limit stop (47) and the fastening part (13) having a form-fitting point of interconnection (9) at the end,
**characterized in that**
the form-fitting point of interconnection (9) is connected via a connecting part (21) with corresponding points of interconnection (10) for connection with the form-fitting point of interconnection (9) of the working part (14) of the other tine (12) of the same rotor (7), **in that** a securing device (24) is provided, which holds the connecting part (21) in the connection position and **in that** the connecting part (21) is configured to lie in a plane with the fastening parts (13) of the tines (12).

2. The tillage machine according to claim 1,
**characterized in that**
the insertion limit stop (47) is provided on the rotor (7) or on the pocket-like receptacle (18), preferably in the pocket-like receptacle (18).

3. The tillage machine according to claim 1 and 2,
**characterized in that**
the fastening part (13) of the respective tine (12) preferably has a counter hook (26) at the end (15) as the form-fitting point of interconnection (9), **in that** the connecting part (21) has double hooks (31) as corresponding points of interconnection (10) and **in that** the double hook (31) of the connecting part (21) is configured to engage in the counter hook (26) of the fastening parts (13) and to connect the fastening parts (13) and thus the tines (12) against centrifugal force and to hold them in the working position.

4. The tillage machine according to claim 1 to 3,
**characterized in that**
the securing device (24) preferably consists of a rotatable latching means (35) with catch (36), which is connected captively to the connecting part (21) and fixes the connecting part (21) in the working position and is configured to allow exchange of the tines (12) by demounting of the connecting part (21) after turning of the rotatable latching means (35).

5. The tillage machine according to claim 1 to 4,
**characterized in that**
the pocket-like receptacle (18) has an elongate orifice (23), which is configured to allow mounting and demounting of the connecting part (21), **in that** the rotatable latching means (35) comprises a cross pin (25), which fixes the connecting part (21) in the working position and **in that** the cross pin (25) has a length greater than the width of the elongate orifice (23) but less than the length of the elongate orifice (23).

## Revendications

1. Appareil de traitement de sol (1), en particulier herse rotative (2) avec au moins une boîte de cadre (5) disposée transversalement par rapport au sens de travail avec plusieurs rotors (7) entraînés disposés l'un à côté de l'autre en une rangée transversalement par rapport au sens de roulement et qui sont rotatifs autour d'axes (6) verticaux, rotors présentant des dents (12) orientées vers le bas, étant donné que les dents (12) présentent chacune une pièce de travail (14) et une pièce de fixation (13) coudée qui est logée dans des logements (18) en forme de poches et qui est assemblée par forme avec le rotor (17), étant donné que la pièce de fixation (13) est formée de manière à pouvoir être enfichée jusqu'à une butée d'introduction (47) dans le logement (18) en forme de poche et la pièce de fixation (13) présente à son bout une jonction (9) assemblée par forme,
**caractérisé en ce que**
la jonction assemblée par forme (9) est reliée par l'intermédiaire d'une pièce de liaison (21) à des jonctions correspondantes (10) pour la liaison avec la jonction assemblée par forme (9) de la pièce de travail (14) de l'autre dent (12) du même rotor (7), qu'est prévu un dispositif de sûreté (24) qui tient la pièce de liaison (21) en position de liaison, et **en ce que** la pièce de liaison (21) est formée de manière à être dans un plan avec les pièces de fixation (13) des dents (12).

2. Appareil de traitement de sol selon la revendication 1,
**caractérisé en ce que**
la butée d'introduction (47) est prévue au rotor (7) ou au logement en forme de poche (18), de préférence dans le logement en forme de poche (18).

3. Appareil de traitement de sol selon les revendications 1 et 2,
**caractérisé en ce que**
la pièce de fixation (13) de chaque dent (12) présente à son bout (15) de préférence un contre-crochet (26) comme jonction assemblée par forme (9), que la pièce de liaison (21) présente des double-crochets (31) comme jonctions correspondantes (10), et **en ce que** le double-crochet (31) de la pièce de liaison (21) prend dans le contre-crochet (26) des pièces de fixation (13) et relie ainsi les pièces de fixation (13), et ainsi les dents (12), en opposition à la force centrifuge et les maintient en position de travail.

4. Appareil de traitement de sol selon les revendications 1 à 3,
**caractérisé en ce que**
le dispositif de sûreté (24) se compose de préférence d'un verrou rotatif (35) avec cran (36) relié de manière imperdable à la pièce de liaison (21) et fixe la pièce de liaison (21) en position de travail et, après la rotation du verrou rotatif (35), permet un remplacement des dents (12) par démontage de la pièce de liaison (21).

5. Appareil de traitement de sol selon les revendications 1 à 4,
**caractérisé en ce que**
le logement en forme de poche (18) présente un orifice oblong (23) qui permet un montage et démontage de la pièce de liaison (21), que le verrou rotatif (35) présente une goupille transversale (25) qui fixe la pièce de liaison (21) en position de travail, et **en ce que** la goupille transversale (25) a une longueur supérieure à la largeur de l'orifice oblong (23), mais inférieure à la longueur de l'orifice oblong (23).
